**Europäisches Patentamt**

**European Patent Office**

**Office européen des brevets**

(11) Veröffentlichungsnummer: **0 178 434**
**B1**

# EUROPÄISCHE PATENTSCHRIFT

(45) Veröffentlichungstag der Patentschrift:
**07.01.88**

(51) Int. Cl.⁴: **B 23 B 31/04**

(21) Anmeldenummer: **85110787.0**

(22) Anmeldetag: **28.08.85**

(54) **Spannbackenfutter, insbesondere Bohrfutter.**

(30) Priorität: **16.10.84 DE 3437792**

(43) Veröffentlichungstag der Anmeldung:
**23.04.86 Patentblatt 86/17**

(45) Bekanntmachung des Hinweises auf die Patenterteilung:
**07.01.88 Patentblatt 88/1**

(84) Benannte Vertragsstaaten:
**CH FR GB IT LI**

(56) Entgegenhaltungen:
**AT - B - 196 204**
**DD - A - 201 985**

(73) Patentinhaber: **Röhm, Günter Horst,**
**Heinrich-Röhm-Strasse 50, D-7927 Sontheim (DE)**

(72) Erfinder: **Röhm, Günter Horst,**
**Heinrich-Röhm-Strasse 50, D-7927 Sontheim (DE)**

(74) Vertreter: **Fay, Hermann, Dipl.-Phys. Dr.,**
**Ensingerstrasse 21 Postfach 1767, D-7900 Ulm (Donau)**
**(DE)**

## Beschreibung

Die Erfindung betrifft ein Spannbackenfutter, insbesondere Bohrfutter, mit einem an eine Drehspindel anschliessbaren Futterkörper und einem daran festen Spannbackenhalter, wobei die Spannbacken im Spannbackenhalter an zur Futterachse geneigten, zum werkzeugseitigen Futterende hin zusammenlaufenden Spannflächen und ausserdem mit dem spindelseitigen Backenende radial verschiebbar an einem zur Betätigung der Spannbacken axial verstellbaren Mitnehmer geführt sind.

Bei aus der EP-A-0 054 774 bekannten Spannbackenfuttern dieser Art ist der Mitnehmer ein einziges allen Spannbacken gemeinsames Teil und mit einer zur Futterachse senkrecht stehenden Scheibe versehen, in der sich radiale Führungsnuten mit hakenförmigem Nutprofil befinden, in die die Spannbacken mit im Profil entsprechend hakenförmigen Führungsleisten eingehängt sind, wobei die Führungsleisten und die Führungsnuten eine axial Zug und Druck übertragende Verbindung zwischen den Spannbacken einerseits und der Mitnehmerscheibe andererseits bilden. An der von den Spannbacken abgewandten Seite trägt die Mitnehmerscheibe einen mit Gewinde versehenen zentralen Mitnehmerzapfen, der in ein Muttergewinde eines Stellstückes greift, das im Inneren des Futterkörpers drehbar und axial unverschiebbar gelagert ist. Wird das Stellstück von aussen, beispielsweise mittels eines im Futterkörper vorgesehenen Schneckenantriebes verdreht, ergibt sich über den Mitnehmerzapfen eine axiale Mitnehmerverstellung, die eine entsprechende Spannbackenverstellung zur Folge hat.

Bei derartigen Spannbackenfuttern greifen die axialen Stützkräfte für die Spannbacken an der Mitnehmerscheibe radial ausserhalb des zentralen Gewindezapfens an und übertragen daher Kippmomente auf den Mitnehmer, die in der Gewindeführung des Mitnehmerzapfens im Stellstück aufgenommen werden müssen. Die Gewindeführung ist mit einem gewissen Spiel behaftet, so dass sich im Rahmen dieses Spiels Kippverstellungen des Mitnehmers ergeben können, und zwar um so mehr, je kürzer der Mitnehmerzapfen im Stellstück geführt ist und je weiter aussen die Spannbacken an der Mitnehmerscheibe abgestützt sind. Kippverstellungen des Mitnehmers aber haben axial unterschiedliche Stellungen der Spannbacken und damit Rundlaufprobleme zur Folge.

Der Erfindung liegt die Aufgabe zugrunde, ein Spannbackenfutter der eingangs genannten Art so auszubilden, dass die erwähnten Rundlaufprobleme vermieden werden.

Diese Aufgabe wird nach der Erfindung dadurch gelöst, dass für jede Spannbacke ein eigener Mitnehmer in Form eines zur Futterachse parallelen Stellbolzens vorgesehen ist, der in einer axial hinter seiner Spannbacke im Futterkörper liegenden Führung verschiebbar ist, und dass am Futterkörper ein zur Futterachse koaxialer Stellring drehbar und axial unverschiebbar gelagert ist, der zum Spannen und Lösen des Futters von aussen betätigbar ist und ein zylindrisches Innengewinde aufweist, mit dem alle Stellbolzen durch jeweils eine Querverzahnung im Eingriff stehen.

Der durch die Erfindung erreichte Fortschritt besteht im wesentlichen darin, dass durch die Abstützung jeder Spannbacke an einem eigenen und axial unmittelbar hinter ihr im Futterkörper angeordneten Stellbolzen die axialen Abstützkräfte ohne das Entstehen von Kippmomenten von den Spannbacken in die Stellbolzen eingeleitet werden. Da die Stellbolzen parallel zur Futterachse angeordnet sind, ist die das Innengewinde tragende innere Umfangsfläche des Stellrings zylindrisch, was anders als bei schräg stehenden Bolzen und dann entsprechend konischer Gewindefläche mit dem Vorteil gleichbleibender Tragflächen im Gewinde und daher eines sehr gleichmässigen Tragbildes verbunden ist, so dass die Stellbolzen durch den Gewindeeingriff am Stellring axial präzise geführt und auch gegen Drehungen um ihre Achse gesichert sind. Gegenseitige Verstellungen der Stellbolzen und entsprechende Rundlaufprobleme können im Ergebnis nicht auftreten.

Eine bevorzugte Ausführungsform der Erfindung ist dadurch gekennzeichnet, dass die Stellbolzen einen die Querverzahnung aufweisenden zylindrischen Schaft besitzen, mit dem sie in jeweils ihre Führung bildenden zylindrischen Kanälen im Futterkörper liegen. Weiter ist zweckmässig die Querverzahnung von Zähnen gebildet, die entsprechend der Steigung des Innengewindes im Stellring geneigt und mit Zahnrücken bzw. Zahnfuss entsprechend dem Krümmungsradius des Stellrings gebogen verlaufen. Auf diese Weise ergibt sich ein besonders gute Tragverhältnisse aufweisender Gewindeeingriff zwischen den Stellbolzen und dem Stellring. Weiter empfiehlt es sich, dass die Stellbolzen einen die Spannbacken in einer Hakenverbindung haltenden und führenden Bolzenkopf besitzen, der entsprechend der Neigung der Spannflächen im Spannbackenhalter abgeschrägt ist und eine die Spannbacke axial abstützende Stirnfläche aufweist. Das bietet die Möglichkeit, den Stellbolzen bis in den Backenhalter vorzustellen, ohne dass die Spannfläche für die Aufnahme des Bolzenkopfes ausgenommen werden müsste.

Da die Mitte des Futterkörpers nicht mehr von Mitnehmern beansprucht ist, kann der Futterkörper einen zentralen Durchgang aufweisen, etwa in Form eines zentralen Kanales für die Zuführung von Kühl- und Schmierflüssigkeit zum Werkzeug. Dieser Durchgang ist gegenüber den Führungen für die Stellbolzen und gegenüber dem Stellring völlig abgeschlossen, so dass die Führungen frei von der Kühl- und Schmiermittelflüssigkeit bleiben.

In konstruktiver Hinsicht empfiehlt sich eine Ausführungsform, die dadurch gekennzeichnet ist, dass der Futterkörper zweiteilig ausgebildet ist, dass der vordere Futterkörperteil einen zentralen Zapfen aufweist, der in eine Zapfenaufnahme des anderen Futterkörperteiles greift, dass die Führungen für die Stellbolzen beide Futterkörperteile anschneiden, und dass der einteilig ausgebildete Stellring zwischen beiden Futterkörperteilen eingefügt ist. Zum Betätigen des Stellringes besteht die bei Futtern an sich vielfach bekannte Möglichkeit, dass am Futterkörper ein Spannschlüssel ansetzbar und am Stellring ein Zahnkranz vorgesehen ist, in den der Spannschlüssel mit einem Zahnritzel eingreift.

Im folgenden wird die Erfindung an einem in der Zeichnung dargestellten Ausführungsbeispiel näher erläutert; es zeigen:

Fig. 1 einen Axialschnitt durch ein Spannbackenfutter nach der Erfindung, und zwar mit unterschiedlichen Spannbackenstellungen in der linken bzw. rechten Zeichnungshälfte, wobei die Spannbackenstellung in der linken Zeichnungshälfte dem grössten Spanndurchmesser, die Spannbackenstellung in der rechten Zeichnungshälfte dem kleinsten Spanndurchmesser entspricht,

Fig. 2 einen Querschnitt durch das Spannbackenfutter nach Fig. 1,

Fig. 3 einen Stellbolzen des Spannfutters nach Fig. 1 in einer Seitenansicht,

Fig. 4 den Stellbolzen nach Fig. 3 in der Ansicht entsprechend dem Pfeil IV,

Fig. 5 die Stirnansicht des Stellbolzens in Fig. 3 in Richtung des Pfeiles V, und

Fig. 6 die Stirnansicht VI des Stellbolzens in Fig. 3.

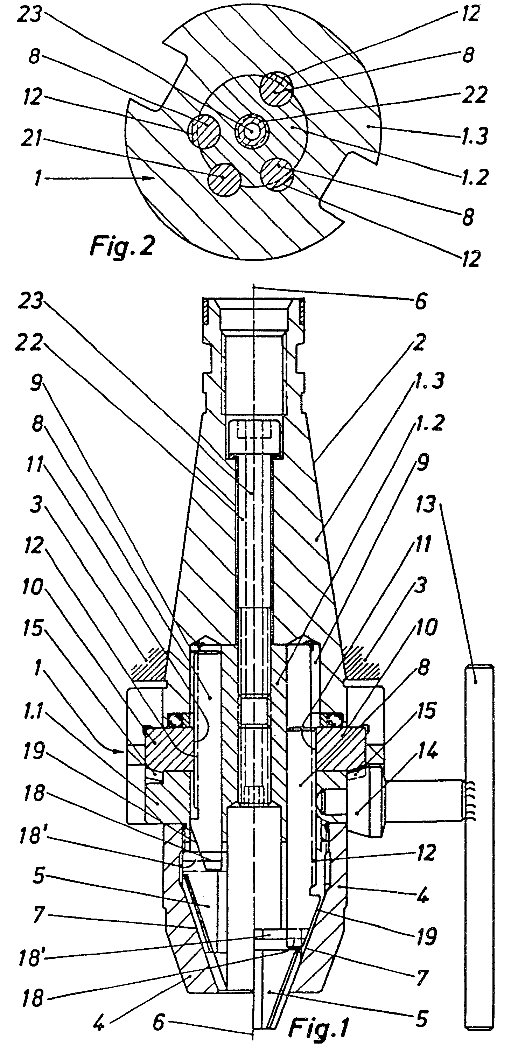

Das in den Fig. 1 und 2 dargestellte Spannbackenfutter besitzt einen Futterkörper 1, der mit einer Kegelaufnahme 2 zum Anschluss an eine lediglich bei 3 angedeutete Drehspindel versehen ist. Am werkzeugseitigen Ende des Futterkörpers 1 ist fest ein Spannbackenhalter 4 angeschraubt, in dem die Spannbacken 5 an zur Futterachse 6-6 geneigten, zum werkzeugseitigen Futterende hin zusammenlaufenden Spannflächen 7 geführt sind. Ausserdem sind die Spannbacken 5 mit dem spindelseitigen Backenende radial verschiebbar an Stellbolzen 8 geführt, die ihrerseits zur Betätigung der Spannbacken 5 axial im Futterkörper 1 verstellbar sind. Diese Stellbolzen 8, von welchen für jede Spannbacke 5 ein eigener Stellbolzen vorgesehen ist, liegen parallel zur Futterachse 6-6 in einer jeweils hinter der zugeordneten Spannbacke 5 im Futterkörper 1 vorgesehenen Führung 9, in der sie axial verschiebbar sind. Ausserdem ist am Futterkörper 1 ein zur Futterachse 6-6 koaxialer Stellring 10 drehbar und axial unverschiebbar gelagert. Der Stellring 10 besitzt ein zylindrisches Innengewinde 11, mit dem alle Stellbolzen 8 durch jeweils eine Querverzahnung 12 im Eingriff stehen. Zum Spannen und Lösen des Spannbackenfutters ist der Stellring 10 von aussen zu betätigen, entweder direkt von Hand oder mit Hilfe eines am Futterkörper 1 ansetzbaren Spannschlüssels 13, der mit einem Zahnritzel 14 in einen am Stellring 10 vorgesehenen Zahnkranz 15 eingreift.

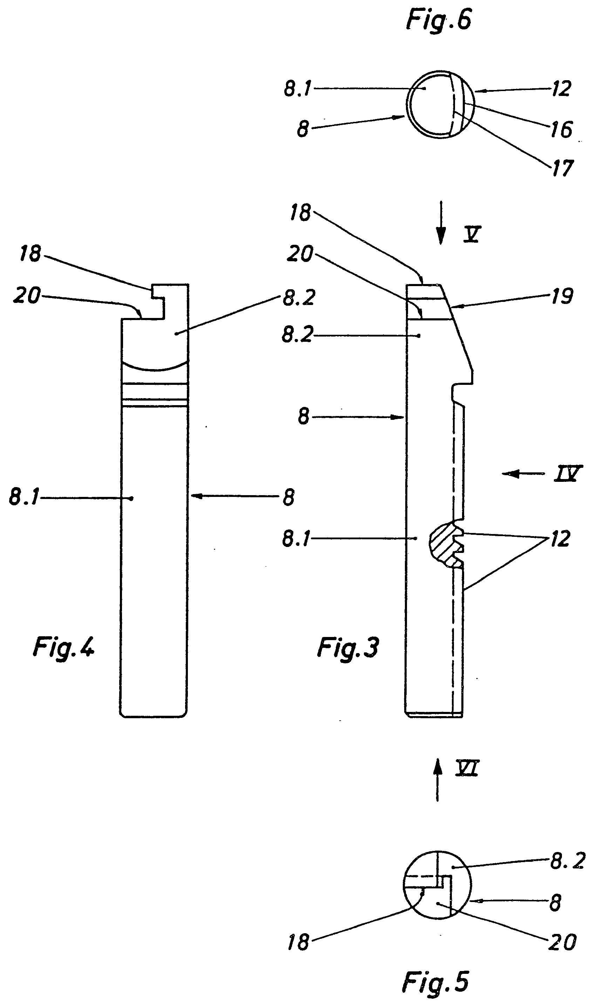

Im einzelnen besitzen die Stellbolzen 8 einen die Querverzahnung 12 tragenden langen zylindrischen Schaft, mit dem sie in jeweils ihre Führung 9 bildenden zylindrischen Kanälen im Futterkörper 1 liegen. Die Querverzahnung 12 ist von Zähnen gebildet, die entsprechend der Steigung des Innengewindes 11 im Stellring 10 geneigt verlaufen und ausserdem mit den Zahnrücken 16 bzw. Zahnfüssen 17 (Fig. 6) entsprechend dem Krümmungsradius des Stellringes 10 gebogen um die Futterachse 6-6 verlaufen. Die Stellbolzen 8 besitzen einen Bolzenkopf 8.2, der die Spannbacken 5 in einer Hakenverbindung hält und führt. Diese Hakenverbindung wird durch zwei seitlich ineinandergreifende Hakenleisten 18, 18' gebildet, die am spindelseitigen Backenende und am Bolzenkopf radial zur Futterachse 6-6 verlaufen. Der Bolzenkopf 8.2 ist im übrigen entsprechend der Neigung der Spannflächen 7 im Spannbackenhalter 4 bei 19 abgeschrägt und besitzt eine die Spannbacke 5 axial abstützende Stirnfläche 20, so dass die axialen Abstützkräfte der Spannbacken 5 axial fluchtend in die Stellbolzen 8 eingeleitet werden.

Der Futterkörper 1 ist zweiteilig ausgebildet. Der vordere Futterkörperteil 1.1 besitzt einen zentralen Zapfen 1.2, der in eine Zapfenaufnahme des anderen Futterkörperteils 1.3 greift. Beide Futterteile 1.1, 1.3 sind durch einen Stift 21 und durch eine zentrale Spannschraube 22 miteinander verbunden. Die Führungen 9 für die Stellbolzen 8 schneiden beide Futterkörperteile 1.1, 1.3 an. Der einteilig ausgebildete Stellring 10 ist zwischen beiden Futterkörperteilen 1.1, 1.3 eingefügt. Die Spannschraube 22 kann einen zentralen Durchgang 23 für beispielsweise Kühl- und Schmierflüssigkeit aufweisen.

## Patentansprüche

1. Spannbackenfutter, insbesondere Bohrfutter, mit einem an eine Drehspindel (3) anschliessbaren Futterkörper (1) und einem daran festen Spannbackenhalter (4), wobei die Spannbacken (5) im Spannbackenhalter (4) an zur Futterachse (6) geneigten, zum werkzeugseitigen Futterende hin zusammenlaufenden Spannflächen (7) und ausserdem mit dem spindelseitigen Backenende radial verschiebbar an einem zur Betätigung der Spannbacken (5) axial verstellbaren Mitnehmer geführt sind, dadurch gekennzeichnet, dass für jede Spannbacke (5) ein eigener Mitnehmer in Form eines zur Futterachse (6) parallelen Stellbolzens (8) vorgesehen ist, der in einer axial hinter seiner Spannbacke (5) im Futterkörper (1) liegenden Führung (9) verschiebbar ist, und dass am Futterkörper (1) ein zur Futterachse (6) koaxialer Stellring (10) drehbar und axial unverschiebbar gelagert ist, der zum Spannen und Lösen des Futters von aussen betätigbar ist und ein zylindrisches Innengewinde (11) aufweist, mit dem alle Stellbolzen (8) durch jeweils eine Querverzahnung (12) im Eingriff stehen.

2. Spannbackenfutter nach Anspruch 1, dadurch gekennzeichnet, dass die Stellbolzen (8) einen die Querverzahnung (12) aufweisenden zylindrischen Schaft (8.1) besitzen, mit dem sie in jeweils ihre Führung (9) bildenden zylindrischen Kanälen im Futterkörper (1) liegen.

3. Spannbackenfutter nach Anspruch 1 oder 2, dadurch gekennzeichnet, dass die Querverzahnung (12) von Zähnen gebildet ist, die entsprechend der Steigung des Innengewindes (11) im Stellring (10) geneigt und mit Zahnrücken (16) bzw. Zahnfuss (17) entsprechend dem Krümmungsradius des Stellringes (10) gekrümmt um die Futterachse (6) verlaufen.

4. Spannbackenfutter nach einem der Ansprüche 1 bis 3, dadurch gekennzeichnet, dass die Stellbolzen (8) einen die Spannbacken (5) in einer Hakenverbindung (18, 18') haltenden und führenden Bolzenkopf (8.2) besitzen, der entsprechend der Neigung der Spannflächen (7) im Spannbackenhalter (4) abgeschrägt ist und eine die Spannbacke (5) axial abstützende Stirnfläche (20) aufweist.

5. Spannbackenfutter nach einem der Ansprüche 1 bis 4, dadurch gekennzeichnet, dass der Futterkörper (1) einen zentralen Durchgang (23) aufweist.

6. Spannbackenfutter nach einem der Ansprüche 1 bis 5, dadurch gekennzeichnet, dass der Futterkörper (1) zweiteilig ausgebildet ist, dass der vordere Futterkörperteil (1.1) einen zentralen Zapfen (1.2) aufweist, der in eine Zapfenaufnahme des anderen Futterkörperteiles (1.3) greift, dass die Führungen (9) für die Stellbolzen (8) beide Futterkörperteile (1.1, 1.3) anschneiden, und dass der einteilig ausgebildete Stellring (10) zwischen beiden Futterkörperteilen (1.1, 1.2) eingefügt ist.

7. Spannfutter nach einem der Ansprüche 1 bis 6, dadurch gekennzeichnet, dass am Futterkörper (1) ein Spannschlüssel (13) ansetzbar und am Stellring (10) ein Zahnkranz (15) vorgesehen ist, in den der Spannschlüssel (13) mit einem Zahnritzel (14) eingreift.

### Claims

1. A clamping jaw chuck, in particular a drilling chuck, comprising a chuck body (1) which can be connected to a rotary spindle (3) and a clamping jaw holder (4) which is fixed thereon, wherein the clamping jaws (5) are guided in the clamping jaw holder (4) on clamping surfaces (7) which are inclined with respect to the chuck axis (6) and which converge towards the end of the chuck which is towards the tool, and are also guided radially displaceably with the end of the jaw which is towards the spindle on an entrainment member which is axially displaceable to actuate the clamping jaws (5), characterised in that provided for each clamping jaw (5) is its own entrainment member in the form of an adjusting pin (8) which is parallel to the chuck axis (6) and which is slidable in a guide (9) disposed in the chuck body (1) axially rearwardly of its clamping jaw (5), and that rotatably and axially non-slidably mounted on the chuck body (1) is an adjusting ring (10) which is coaxial with the chuck axis (6) and which can be actuated from the outside for tightening and loosening the chuck and which has a cylindrical internal screwthread (11) with which all adjusting pins (8) are engaged by a respective transverse tooth arrangement (12).

2. A clamping jaw chuck according to claim 1 characterised in that the adjusting pins (8) have a cylindrical shank (8.1) which carries the transverse tooth arrangement (12) and with which they are disposed in cylindrical passages forming their respective guides (9) in the chuck body (1).

3. A clamping jaw chuck according to claim 1 or claim 2 characterised in that the transverse tooth arrangement (12) is formed by teeth which are inclined in such a way as to correspond to the pitch of the internal screwthread (11) in the adjusting ring (10) and extend with their tooth flank (16) or root (17) in a curved configuration corresponding to the radius of curvature of the adjusting ring (10) around the chuck axis (6).

4. A clamping jaw chuck according to one of claims 1 to 3 characterised in that the adjusting pins have a pin head (8.2) which holds and guides the clamping jaws (5) in a hook-like connection (18, 18') and which is bevelled to correspond to the inclination of the clamping surfaces (7) in the clamping jaw holder (4) and which has an end face (20) for axially supporting the clamping jaw (5).

5. A clamping jaw chuck according to one of claims 1 to 4 characterised in that the chuck body (1) has a central passage (23) therethrough.

6. A clamping jaw chuck according to one of claims 1 to 5 characterised in that the chuck body (1) is in two parts, that the front part (1.1) of the chuck body has a central spigot (1.2) which engages into a spigot receiving means in the other part (1.3) of the chuck body, that the guides (9) for the adjusting pins (8) intersect both parts (1.1, 1.3) of the chuck body and that the adjusting ring (10) which is made in one piece is inserted between the two parts (1.1, 1.2) of the chuck body.

7. A clamping chuck according to one of claims 1 to 6 characterised in that a tightening key (13) can be fitted on the chuck body (1) and provided on the adjusting ring (10) is an annular tooth arrangement (15) into which the tightening key (13) engages with a toothed pinion (14).

### Revendications

1. Mandrin de serrage, notamment mandrin porte-foret, comportant un corps (1) pouvant être raccordé à une broche rotative (3), et un support (4) de mâchoires de serrage, fixé à ce corps de mandrin, les mâchoires de serrage (5) situées dans le support (4) de ces mâchoires étant guidées le long de surfaces de serrage (7) inclinées par rapport à l'axe (6) du mandrin et convergeant vers l'extrémité du mandrin, située du côté de l'outil, et étant en outre guidées, par l'extrémité des mâchoires située du côté de la broche, de manière à être déplaçables radialement sur un organe d'entraînement déplaçable axialement pour réaliser l'actionnement des mâchoires de serrage (5), caractérisé en ce que, pour chaque mâchoire de serrage (5), il est prévu un organe particulier réalisé sous la forme d'un boulon de réglage (8) parallèle à l'axe (6) du mandrin et qui est déplaçable dans un guide (9) disposé axialement en arrière de la mâchoire de serrage (5) dans le corps (1) du mandrin, et que sur le corps (1) du mandrin se trouve montée, de manière à pouvoir tourner, sans possibilité de déplacement axial, une bague de réglage (10) qui est coaxiale à l'axe (6) du mandrin et peut être actionnée de l'extérieur pour serrer et desserrer le mandrin et comporte un taraudage cylindrique (11), avec lequel tous les boulons de réglage (8) sont en prise au moyen d'une denture transversale respective (12).

2. Mandrin de serrage selon la revendication 1, caractérisé en ce que les boulons de réglage (8) possèdent une tige cylindrique (8.1) qui porte la denture transversale (12) et avec laquelle ils sont disposés dans des canaux cylindriques, constituant respectivement le guide (9) des boulons de guidage et ménagés dans le corps (1) du mandrin.

3. Mandrin de serrage selon l'une des revendications 1 ou 2, caractérisé en ce que la denture transversale (12) est constituée par des dents qui sont inclinées conformément à la pente du taraudage (11) ménagé dans la bague de réglage (10) et s'étendent par leur dos (16) ou par leur pied (17) autour de l'axe (6) du mandrin, avec une forme cintrée correspondant au rayon de courbure de la bague de réglage (6).

4. Mandrin de serrage selon l'une des revendications 1 à 3, caractérisé en ce que les boulons de réglage (8) possèdent une tête (8.2) qui maintient et guide les mâchoires de serrage (5) selon une liaison en forme de crochet (18, 18'), est biseautée conformément à l'inclinaison des surfaces de serrage (7) dans le support (4) des mâchoires de serrage et possède une surface frontale (20) soutenant axialement la mâchoire de serrage (5).

5. Mandrin de serrage suivant l'une des revendications 1 à 4, caractérisé par le fait que le corps (1) du mandrin possède un passage central (23).

6. Mandrin de serrage selon l'une des revendications 1 à 5, caractérisé en ce que le corps (1) du mandrin est réalisé en deux éléments, que l'élément avant (1.1) du corps du mandrin possède un embout central (1.2) qui s'engage dans un logement que comporte l'autre élément (1.3) du corps du mandrin, que les guides (9) prévus pour les boulons de guidage (8) sont découpés dans les deux éléments (1.1, 1.3) du corps du mandrin et que la bague de réglage (10) réalisée d'un seul tenant est insérée entre les deux éléments (1.1, 1.2) du corps du mandrin.

7. Mandrin de serrage selon l'une des revendications 1 à 6, caractérisé en ce qu'une clé de serrage (13) peut être mise en place sur le corps (1) du mandrin et qu'il est prévu sur la bague de réglage (10) une couronne dentée (15), dans laquelle la clé de serrage (13) pénètre au moyen d'un pignon (14).

0 178 434

Fig.2

Fig.1

**Fig.6**

8.1 — 12
8 — 16
— 17

18
20
— 8.2
— 19
8.2
8
— IV
8.1 — 12

**Fig.4**

18
20
8.1 — 8

**Fig.3**

— 8.2
— 8
18 — 20

**Fig.5**